# EUROPEAN PATENT APPLICATION

(11) **EP 3 965 045 A1**
(43) Date of publication of application: **09.03.2022**
(21) Application number: 20812685.4
(22) Date of filing: 08.04.2020
(51) Int. Cl.: G06Q 30/06, G06Q 50/12

(54) **SYSTEM FOR PURCHASING OR RESERVING WINE, AND METHOD AND PROGRAM IMPLEMENTED IN SAID SYSTEM**

(30) Priority: 30.05.2019 JP 2019101264
(71) Applicant: Broadedge Warelink Inc., Tokyo 150-0034 (JP)
(72) Inventor: MARUOKA Eishi, Tokyo 150-0034 (JP)
(74) Representative: Uexküll & Stolberg
(86) International application number: PCT/JP2020/015790
(87) International publication number: WO 2020/241069

(57) **Abstract**

This system of the present invention comprises a means of presenting a user with information of a plurality of wines, a means of receiving first user input selecting one among the plurality of wines, a means of presenting the user with information of one or more stores corresponding to the selected wine, a means of receiving second user input selecting one among the one or more stores, and a means of performing processing for purchasing or reserving the selected wine in order to provide the user with the selected wine in the selected shop in response to receiving the second user input.

## Description

### [Technical Field]

The present invention is directed to a system for purchasing or reserving wine and a method and a program implemented in said system.

### [Background Art]

Websites for reserving stores such as a restaurant have been known (see, for example, Non Patent Literature 1).

### [Citation List]

### [Non Patent Literature]

[NPL 1] Gurunavi, Inc., "Enkai/gurume joho kensaku saito Gurunavi (Feast/gourmet information search site Gurunavi)", [online], [retrieved on May 15, 2019], Internet <URL: https://www.gnavi.co.jp/>

### [Summary of Invention]

### [Technical Problem]

In a conventional website for reserving a store, even if there was wine that a user wants to drink, it was not possible to use the wine that the user wants to drink as a criterion to search a store that can provide the wine that the user wants to drink. Thus, there was the problem of a user needing to check each time whether or not a store has the wine that the user wants to drink among the wine that can be provided in the store after searching the store, and the problem of a user realizing that a store does not store the wine that the user wants to drink only after visiting the store that the user reserved.

One object of the present invention is to provide a system that enables a user to purchase or reserve wine and a method and a program implemented in said system so as to enable the user to drink the wine that the user wants to drink in a store that the user reserve.

### [Solution to Problem]

In one aspect of the present invention, the system of the present invention is a system for purchasing or reserving wine, the system comprising: a means of presenting a user with information of a plurality of wines; a means of receiving first user input selecting one among the plurality of wines; a means of presenting the user with information of one or more store corresponding to the selected wine; a means of receiving second user input selecting one among the one or more store; and a means of performing a processing for purchasing or reserving the selected wine in order to provide the user with the selected wine in the selected store in response to receiving the second user input.

In one embodiment of the present invention, a means of performing a processing for reserving the selected store may be further comprised.

In one embodiment of the present invention, the processing for reserving the selected store may comprise a processing for reserving the selected store which assumes carry-in of the selected wine to the selected store or a processing for reserving the selected store which assumes delivery of the selected wine to the selected store.

In one embodiment of the present invention, the processing for reserving the selected store may comprise: a processing for determining whether or not the selected wine is present in storage of the selected store; a processing for setting aside the selected wine at the selected store when it is determined that the selected wine is present in storage of the selected store; and a processing of reserving the selected store which assumes that the selected wine is provided in the selected store.

In one embodiment of the present invention, the one or more store corresponding to the selected wine may comprise one or more store that can provide the user with food that matches with the selected wine.

In one embodiment of the present invention, a means of presenting information of one or more food that matches with the selected wine in response to receiving the first user input; and a means of receiving third user input selecting one among the one or more food may be further comprised, wherein the means of presenting the user with information of one or more store corresponding to the selected wine may comprise: a means of presenting the user with information of one or more store that can provide the user with the selected food in response to receiving the third user input.

In one embodiment of the present invention, the plurality of wines may comprise a plurality of wines at least owned by a wholesaler which sets a plurality of stores as wholesale destinations; and the plurality of stores may comprise the one or more store.

In one embodiment of the present invention, the plurality of wines at least owned by the wholesaler may comprise wine owned by the wholesaler and wine owned by a stocking dealer that is a stocking destination of the wholesaler.

In one embodiment of the present invention, a means of updating information of the plurality of wines presented to the user in real time may be further comprised.

In one embodiment of the present invention, a means of receiving information of wine consumed by the user in the reserved store, wherein the wine consumed by the user comprises the purchased or reserved wine and wine carried in the reserved store or wine delivered to the reserved store or wine present in storage of the reserved store; and a means of performing a processing for assessing consumption trend of wine based on the information of wine consumed by the user may be further comprised.

In one aspect of the present invention, the method of the present invention is a method performed in a system for purchasing or reserving wine, wherein the system comprises a processor part, wherein the method comprises: the processor part presenting a user with information of a plurality of wines; the processor part receiving first user input selecting one among the plurality of wines; the processor part presenting the user with information of one or more store corresponding to the selected wine; the processor part receiving second user input selecting one among the one or more store; and the processor part performing a processing for purchasing or reserving the selected wine in order to provide the user with the selected wine in the selected store in response to receiving the second user input.

In one aspect of the present invention, the program of the present invention is a program performed in a system for purchasing or reserving wine, wherein the system comprises a processor part, wherein when performed by the processor part, the program causes the processor part to at least perform: presenting a user with information of a plurality of wines; receiving first user input selecting one among the plurality of wines; presenting the user with information of one or more store corresponding to the selected wine; receiving second user input selecting one among the one or more store; and performing a processing for purchasing or reserving the selected wine in order to provide the user with the selected wine in the selected store in response to receiving the second user input.

In one aspect of the present invention, the system of the present invention is a system for purchasing or reserving wine, the system comprising: a means of presenting a user with information of a plurality of stores; a means of receiving first user input of selecting one among the plurality of stores; a means of presenting the user with information of one or more bottle of wine corresponding to the selected store in response to receiving the first user input; a means of receiving second user input selecting one among the one or more bottle of wine; and a means of performing a processing of reserving the selected store and the selected wine in order to provide the user with the selected wine in the selected store in response to receiving the second user input.

In one embodiment of the present invention, the one or more bottle of wine corresponding to the selected store may comprise one or more bottle of wine present in storage of the selected store.

In one embodiment of the present invention, the one or more bottle of wine corresponding to the selected store may comprise one or more bottle of wine at least owned by a wholesaler which sets a plurality of stores as wholesale destinations.

In one embodiment of the present invention, wherein the one or more bottle of wine at least owned by the wholesaler may comprise wine owned by the wholesaler and wine owned by a stocking dealer that is a sticking destination of the wholesaler.

In one embodiment of the present invention, a means of updating information of the one or more bottle of wine presented to the user in real time may be further comprised.

In one embodiment of the present invention, a means of receiving information of wine consumed by the user in the reserved store, wherein the wine consumed by the user comprises the selected wine and wine carried in the reserved store or wine delivered to the reserved store or wine present in storage of the reserved store; and a means of performing a processing for assessing consumption trend of the purchased or reserved wine based on the information of wine consumed by the user may be further comprised.

In one aspect of the present invention, the method of the present invention is a method performed in a system for purchasing or reserving wine, wherein the system comprises a processor part, wherein the method comprises: the processor part presenting a user with information of a plurality of stores; the processor part receiving first user input selecting one among the plurality of stores; the processor part presenting the user with information of one or more bottle of wine corresponding to the selected store in response to receiving the first user input; the processor part receiving second user input selecting one among the one or more bottle of wine; and the processor part performing a processing for reserving the selected store and the selected wine in order to provide the user with the selected wine in the selected store in response to receiving the second user input.

In one aspect of the present invention, the program of the present invention is a program performed in a system for purchasing or reserving wine, wherein the system comprises a processor part, wherein, when performed by the processor part, the program causes the processor part to at least perform: presenting a user with information of a plurality of stores; receiving first user input selecting one among the plurality of stores; presenting the user with information of one or more bottle of wine corresponding to the selected store in response to receiving the first user input; receiving second user input selecting one among the one or more bottle of wine; and performing a processing for reserving the selected store and the selected wine in order to provide the user with the selected wine in the selected store in response to receiving the second user input.

### [Advantageous Effects of Invention]

According to the present invention, it is possible to provide a system that enables a user to purchase or reserve wine and a method and a program implemented in said system so as to enable the user to drink the wine that the user wants to drink in a store that the user reserved.

### [Brief Description of Drawings]

[Figure 1] A diagram showing the flow of a new business model utilizing purchase/reservation of wine.
[Figure 2A] A diagram showing a screen **200** displayed on a user apparatus.
[Figure 2B] A diagram showing a screen **210** displayed on a user apparatus.
[Figure 2C] A diagram showing a screen **220** displayed on a user apparatus.
[Figure 2D] A diagram showing a screen **230** displayed on a user apparatus.
[Figure 2E] A diagram showing a screen **240** displayed on a user apparatus.
[Figure 2F] A diagram showing a screen **250** displayed on a user apparatus.
[Figure 2G] A diagram showing a screen **260** displayed on a user apparatus.
[Figure 3] A diagram showing an example of a configuration of a computer system for realizing the above-mentioned new business model.
[Figure 4A] A diagram showing an example of a configuration of information housed in a wine database part **341.**
[Figure 4B] A diagram showing an example of configuration of information housed in a store database part **342.**
[Figure 5] A diagram showing an example of the flow of the processing implemented in a computer system **300.**
[Figure 6] A diagram showing another example of the flow of the processing implemented in a computer system **300.**
[Figure 7] A diagram showing an example of the flow of the processing implemented in a computer system **300.**
[Figure 8] A diagram showing an example of the flow of the processing implemented in a computer system **300.**

### [Description of Embodiments]

The embodiment of the present invention is explained below while referring to the drawings.

### 1. A new business model utilizing purchase/reservation of wine

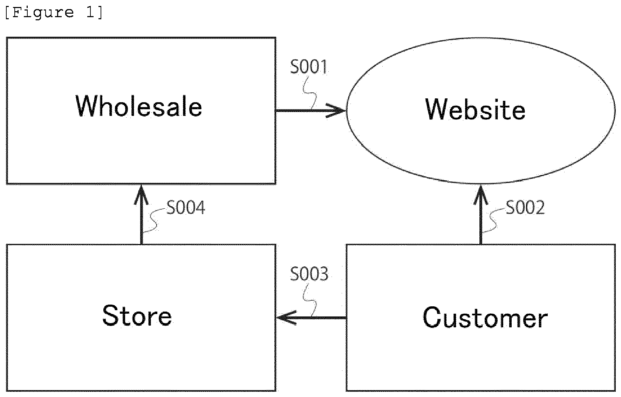

Figure 1 shows the flow of a new business model utilizing purchase/reservation of wine. Each step of this flow is explained below in detail.

Step **S001:** A wholesaler inserts information of wine owned by the wholesaler and information of stores which are the wholesale destinations of the wholesaler in a website. The information of wine is, for example, but not limited to, wine brand, type, production area, vintage, body, price, food that matches with the wine and the like. The information of stores is, for example, but not limited to, store name, address, genre, business hours, access method, wine list, information showing whether or not it is possible to carry in wine, information showing whether or not it is possible to directly deliver wine and the like.

Step **S002:** A customer uses a user apparatus to access the information of wine inserted in the website. The customer can identify the wine that he/she wants to drink by accessing the information of wine. Next, the customer uses the user apparatus to access the information of stores inserted in the website. This information of stores is, for example, but not limited to, information of stores having the wine identified by the customer in storage, information of stores in which the customer can carry in the wine that the customer identified, information of stores in which the wine that the customer identified can be directly delivered, information of stores that provide food that matches with the wine that the customer identified and the like. The customer can reserve the store by accessing the information of stores. Furthermore, assuming that the customer will consume the wine that the customer identified at the store, the customer can make reservation of the wine that the customer identified (e.g., setting aside the wine that the customer identified, directly delivering the wine that the customer identified, and carrying in the wine that the customer identified) along with reservation of the store.

In addition, a user ID and a password is required to be registered beforehand in order to enter this website and the user ID and password can be used to allow access to the information of wine and the information of stores.

Step **S003:** The customer visits the store that was reserved in step **S002,** consumes the reserved wine and pays the price to the store.

Step **S004:** The store provides the wholesaler with the advertisement fee for inserting the information of the store in the website, fee for delivery to customer and the like. The store may also provide the wholesaler with data of purchase action/consumption action of wine of customers.

As such, a customer can view all wine owned by the wholesaler at first on the website, and thus can select desired wine among all wine owned by the wholesaler. Therefore, the customer can examine various wine with rich variation without the choices of wine being limited to the storage of the store.

In addition, the customer can view on the website the information of stores providing food that matches with the desired wine that the customer identified and select a store that the customer wants to reserve thereamong. This can more easily realize simultaneous enjoyment of desired wine and food that matches with the desired wine even of the customer did not know the suitability regarding a combination with wine.

In addition, by direct delivery of the wine that the customer identified and/or the customer carrying in the wine that the customer identified, the store can provide the customer with a number of brands and number of storages of wine that the store normally cannot handle. This can achieve improvement in the degree of satisfaction of the customer and increase in the amount of consumption/consumption cost of wine of the customer.

In addition, the wholesaler can receive data of wine purchase behavior/consumption behavior of customers from the store, whereby the wholesaler can attempt optimization of wine stocking, optimization of selection of wine in each store, and the like.

Furthermore, the above-discussed embodiment explained an example of presenting information of wine owned by a wholesaler to a customer, but the present invention is not limited thereto. For example, in step **S001,** the wholesaler may insert information of wine owned by a stocking dealer (importer) that is the stocking destination of the wholesaler, information of wine owned by the wholesaler and information of stores which are the wholesale destinations of the wholesaler in a website so that a customer can view not only the information of wine owned by the wholesaler, but also information of wine owned by the stocking dealer.

### 2. Screens displayed on a user apparatus

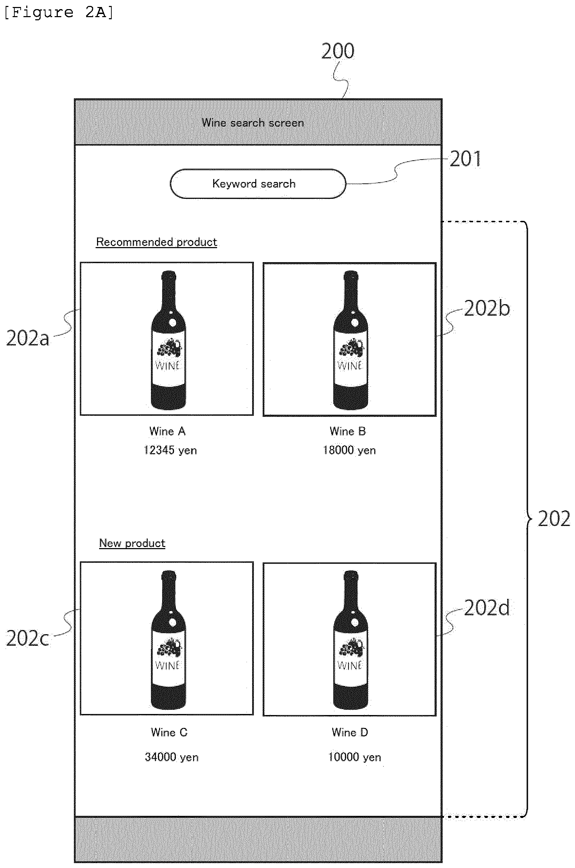

Figure **2A** to Figure **2G** show screens **200** to **260** displayed on a user apparatus. Display and transition of the screens **200** to **260** are achieved by, for example, a program housed in a memory part of a user apparatus being performed by a processor part of the user apparatus. Regarding each of the screens **200** to **260,** the entirety thereof does not have to be displayed on the user apparatus. For example, a part of the screen user **200** may be displayed on the user apparatus and another part of the screen **200** may be displayed by carrying out scrolling operation.

Figure **2A** shows a screen **200** displayed on a user apparatus. The screen **200** is an example of a wine search screen for searching desired wine among a plurality of wines. In the example shown in Figure **2A****,** the screen **200** comprises a search button **201** for carrying out keyword search and a wine information region **202** displaying a list of information of wine.

When a user selects the search button **201,** a screen form inputting a search condition for searching wine is displayed. The user can input a search condition of wine in the screen. The search condition of wine includes, for example, but not limited to, price (e.g., up to 1999 yen, 2000 to 4999 yen, 5000 to 9999 yen, 10000 to 29999 yen, or 30000 yen and above), type (e.g., wine (red), wine (white), wine (rose), or sparkling wine), production area (e.g., France (Burgundy), France (Bordeaux), Italy (Tuscany), Italy (Piemonte), Spain, Germany, America, Australia, Argentina, South Africa, Japan, or China), variety (e.g., Pinot Noir, Cabernet Sauvignon, Merlot, Chardonnay, or Riesling), vintage (e.g., 2010 and after, 2000 to 2009, 1990 to 1999, 1980 to 1989, or 1979 and before), body (e.g., light body, medium body, or full body) and the like.

In the Example shown in Figure **2A****,** the wine information region **202** comprises a region **202a** showing information of wine A, a region **202b** showing information of wine B, a region **202c** showing information of wine C and a region **202d** showing information of wine D. Each of region **202a** to region **202d** is configured to be selectable.

In the example shown in Figure **2A****,** only recommended products and new products are shown in the wine information region **202.** Alternatively, in addition to recommended products and new products, or instead of recommended products and new products, search results of wine produced in response to input of search condition of wine may be displayed on the wine information region **202.**

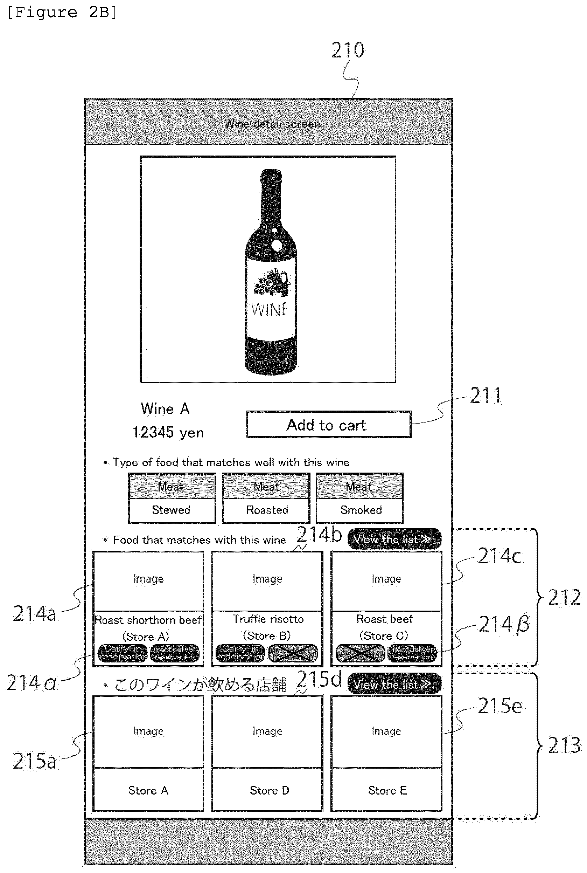

Figure **2B** shows a screen **210** displayed on a user apparatus. The screen **210** is an example of wine detail screen for presenting detailed information of wine. The screen **210** is, for example, a screen that has transitioned from the screen **200** by selecting the region **202a** shown in Figure **2A****.** In the example shown in Figure **2B****,** the screen **210** presents detailed information of wine A. In the example shown in Figure **2B****,** the screen **210** comprises an add-to-cart region **211** for adding wine A to the cart and ultimately moving on to purchasing procedures for the wine A, a food information region **212** showing information of food that matches with the wine A and a store information region **213** showing information of stores that provide the wine A.

In the example shown in Figure **2B****,** the food information region **212** comprises a region **214a** showing information of the food "roast shorthorn beef" that matches with the wine A, a region **214b** showing information of the food "truffle risotto" that matches with the wine A and a region **214c** showing information of the food "roast beef" that matches with the wine A. In other words, in the example shown in Figure **2B****,** "roast shorthorn beef, "truffle risotto" and "roast beef" are mentioned as food that matches with the wine A. In the example shown in Figure **2B****,** the region **214a** is associated with a store A that can provide the food "roast shorthorn beef", the region **214b** is associated with a store B that can provide the food "truffle risotto" and the region **214c** is associated with a store C that can provide the food "roast beef". In addition, each of the region **214a,** the region **214b** and the region **214c** comprises a carry-in reservation button **214α** for making reservation of the store A which assumes carry-in of the wine A to the store A and a direct delivery reservation button **214β** for making reservation of the store A which assumes direct delivery of the wine A to the store A. In the Example shown in Figure **2B****,** both the carry-in reservation button **214α** and the direct delivery reservation button **214β** of the region **214a** are presented in a selectable mode. This means that the store A is a store that can handle both carry-in of wine and direct delivery of wine. In the example shown in Figure **2B****,** while the carry-in reservation button **214α** of the region **214b** is presented in a selectable mode, the direct delivery reservation button **214β** of the region **214b** is presented in an unselectable mode. This means that the store B is a store that can handle carry-in of wine but cannot handle direct delivery of wine. In the example shown in Figure **2B****,** while the carry-in reservation button **214α** of the region **214c** is presented in an unselectable mode, the direct delivery reservation button **214β** of the region **214c** is presented in a selectable mode. This means that the store C is a store that cannot handle carry-in of wine but can handle direct delivery of wine. Furthermore, information of food that matches with the wine A may be presented to a user (e.g., by displaying a list) by the user selecting a "view the list" button in the food information region **212.**

In the example shown in Figure **2B****,** the store information region **213** comprises a region **215a** showing information of a store A that provides wine A, a region **215d** showing information of a store D that provides wine A and a region **215e** showing information of a store E that provides wine A. Each of the region **215a,** the region **215d** and the region **215e** is configured to be selectable. Furthermore, information of a store that provides the wine A may be presented to a user (e.g., by displaying a list) by the user selecting a "view the list" button in the store information region **213.** In addition, information of one or more store presented in the store information region **213** may be information of a store that provides the wine A at a normal time, or may be real-time information of a store that can provide the wine A at that time point.

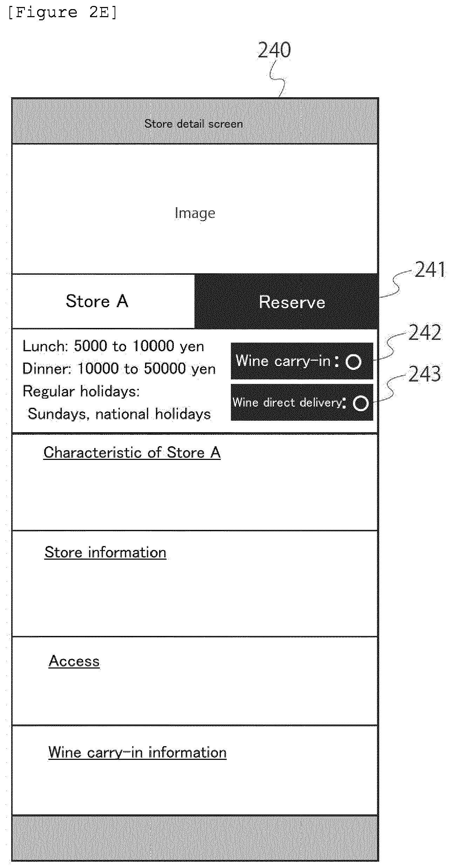

When the region **214a** shown in Figure **2B****,** or the carry-in reservation button **214α** in the region **214a,** or the direct delivery reservation button **214β** in the region **214a** is selected by a user, the screen **210** transitions to the screen **240** of Figure **2E** which is discussed below. Alternatively, when the carry-in reservation button **214α** in the region **214a** is selected by a user, the screen **210** may transition to a screen exclusively for making reservation of the store A which assumes carry-in of the wine A to the store A. Alternatively, when the direct delivery reservation button **214β** in the region **214a** is selected by a user, the screen **210** may transition to a screen exclusively for making reservation of the store A which assumes direct delivery of the wine A to the store A. The same apples to a case in which the region **214b,** the carry-in reservation button **214α** in the region **214b,** the region **214c,** or the direct delivery reservation button **214β** in the region **214c** is selected by a user.

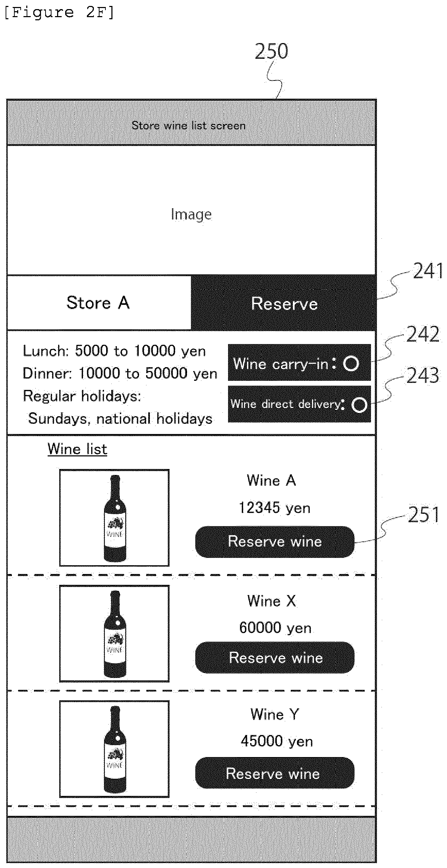

When the region **215a** shown in Figure **2B** is selected by a user, the screen **210** transitions to the screen **250** of Figure **2F** which is discussed below. The same applies to the case in which the region **215d** or the region **215e** is selected by a user.

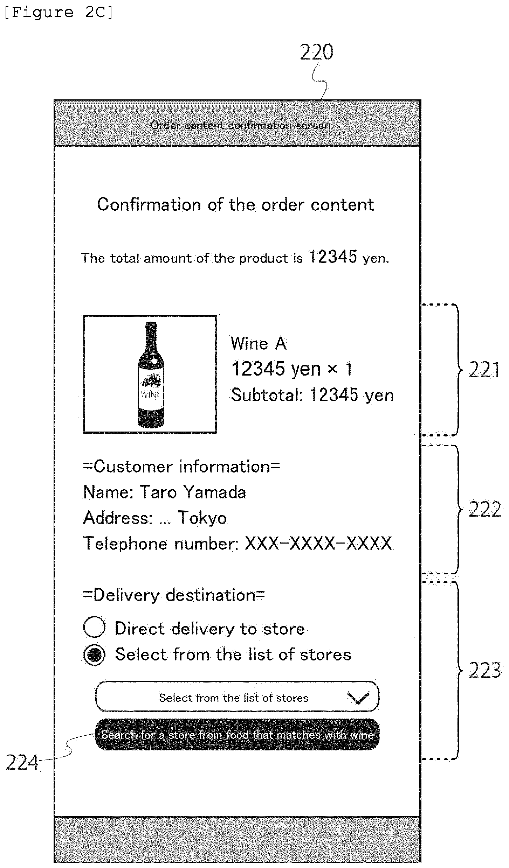

Figure **2C** shows a screen **220** displayed on a user apparatus. The screen **220** is an example of an order content confirmation screen for confirming an order content. The screen **220** is, for example, a screen transitioned from the screen **210** by selecting the add-to-cart region **211** shown in Figure **2B****.** In the example shown in Figure **2C****,** the screen **220** shows that the content of the order is the wine A. In the example shown in Figure **2C****,** the screen **220** comprises an order information region **221** showing the content of ordered wine, an orderer information region **222** showing personal information of an orderer (user) and a delivery destination information region **223** showing a delivery destination of ordered wine.

In the example shown in Figure **2C****,** order information showing that one bottle of wine A with the price of 12345 yen per bottle is ordered is displayed in the order information region **221** together with the image of the wine A. However, the number or subtotal of the image of the wine displayed in the order information region **221** may change in accordance with the type and number of bottles of the ordered wine. In addition, in the example shown in Figure **2C****,** the orderer's name, address and telephone number are displayed in the orderer information region **222** as personal information of the orderer, but the personal information of the orderer displayed in the orderer information region **222** is not limited thereto. In addition, in the example shown in Figure **2C****,** it is possible to select the orderer's address or a store as the delivery designation of the ordered wine in the delivery destination information region **223.** When a store is selected as the delivery destination or the ordered wine, as shown in Figure **2C****,** a store list selection region for selecting a store that is to be the delivery destination from a store list and a food-based selection region **224** for selecting a store that provides food that matches with the wine A are displayed. When the store list selection region is selected, for example, a list of all stores that provide the wine is displayed (e.g., in a pull-down form).

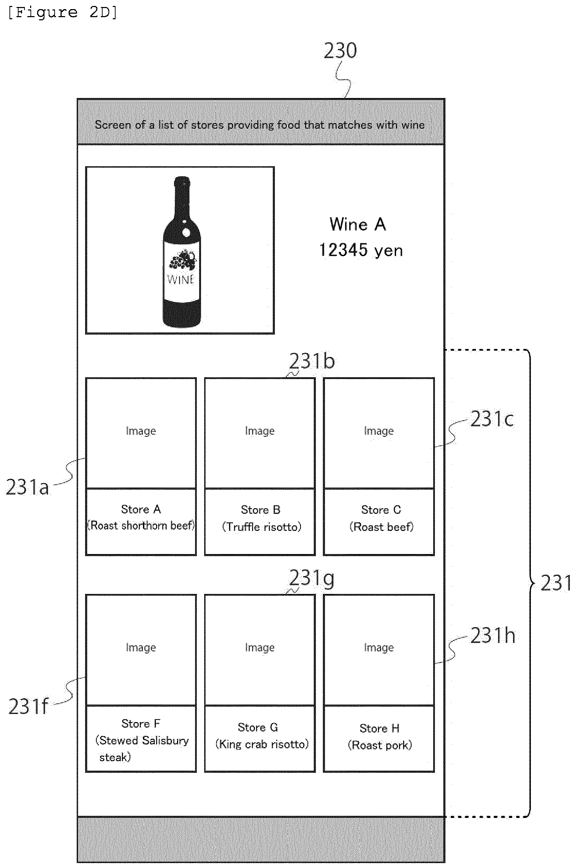

Figure **2D** shows a screen **230** displayed on a user apparatus. The screen **230** is an example of a screen of a list of stores that provide food that matches with the wine. The screen **230** is a screen that has transitioned from the screen **220** by selecting the food-based selection region **224** shown in Figure **2C****.** In the example shown in Figure **2D****,** the screen **230** presents information of one or more store that provides food that matches the wine A. In the example shown in Figure **2D****,** the screen **230** comprises a region **231** displaying a list of information of one or more store that provides food that matches with the wine A.

In the example shown in Figure **2D****,** the region **231** comprises a region **231a** showing information of a store A that provides the food "roast shorthorn beef" that matches with the wine A, a region **231b** showing information of a store B that provides the food "truffle risotto" that matches with the wine A, a region **231c** showing information of a store C that provides the food "roast beef" that matches with the wine A, a region **231f** showing information of a store F that provides the food "stewed Salisbury steak" that matches with the wine A, a region **231g** showing information of a store G that provides the food "king crab risotto" that matches with the wine A and a region **231h** showing information of a store H that provides the food "roast pork" that matches with the wine A. Each of the region **231a,** the region **231b,** the region **231c,** the region **231f,** the region **231g** and the region **231h** is configured to be selectable.

Figure **2E** shows a screen **240** displayed on a user apparatus. The screen **240** is an example of a store detail screen for presenting detailed information of a store. The screen **240** is, for example, a screen that has transitioned from the screen **230** by selecting the region **231a** shown in Figure **2D****.** In the example shown in Figure **2E****,** the screen **240** presents detailed information of the store A. In the example shown in Figure **2E****,** the screen **240** comprises a reservation button **241** to proceed to make reservation of the store A, wine carry-in information **242** showing whether or not wine can be carried in and wine direct delivery information **243** showing whether or not wine can be directly delivered. The screen **240** may further comprise a region showing information showing the characteristic of the store A, basic information of the store A (e.g., address), information showing a method of access to the store A, information regarding carry-in of wine to the store A and the like.

In the Example shown in Figure 2E, the reservation button **241** is configured to be selectable. The screen **240** transitions to a screen for performing reservation of the store A by a user selecting the reservation button **241.**

In the example shown in Figure **2E****,** the wine carry-in information **242** shows "o". This means that carry-in of wine to the store A is possible. In addition, in the example shown in Figure **2E****,** the wine direct delivery information **243** shows "o". This means that direct delivery of wine to the store A is possible.

Furthermore, after a screen ultimately transitions from the screen **220** of Figure **2C** to the screen **240** of Figure **2E** via the screen **230** of Figure **2D****,** when a user completes the reservation of the store, the order of the wine in the screen **220** of Figure **2C** would be automatically fixed. This enables the wine A to be delivered to the store so that the user can drink the wine A at the store on the store reservation date.

In addition, when the screen transitioned from the screen **210** of Figure **2B** to the screen **240** of Figure **2E** by a user selecting the region **214a** or the carry-in reservation button **214α** or the direct delivery reservation button **214β** of Figure **2B****,** the wine A may be automatically put in the cart in response to the selection of the reservation button **241.**

Figure **2F** shows a screen **250** displayed on a user apparatus. The screen **250** is an example of a store wine list screen for presenting a wine list of a store. The screen **250** is, for example, a screen that has transitioned from the screen **210** by selecting the region **215a** shown in Figure **2B****.** In the example shown in Figure **2F****,** the screen **250** presents a while list of the store A. In the example shown in Figure **2F****,** the screen **250** comprises a reservation button **241,** wine carry-in information **242,** wine direct delivery information **243** and list wine reservation button **251** for reserving wine listed in the wine list.

In the example shown in Figure **2F****,** the wine list of the store A comprises wine A with the price "12345 yen", wine X with the price "60000 yen" and wine Y with the price "45000 yen". When the list wine reservation button **251** in the wine list is selected by a user, the screen **250** transitions to a screen for simultaneously reserving both the wine A and the store A. This enables the user to easily make reservation of both the wine A and the store A.

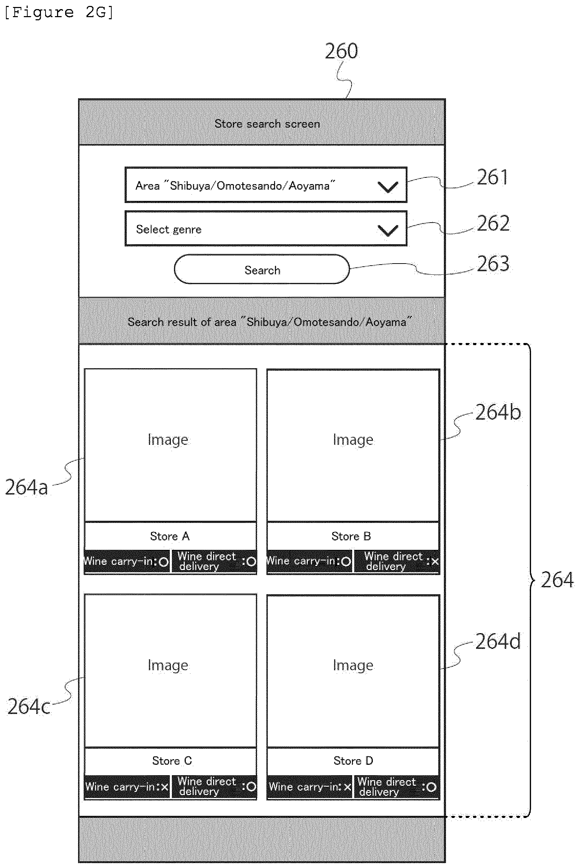

Figure **2G** shows a screen **260** displayed on a user apparatus. The screen **260** is an example of a store search screen for searching a store. In the example shown in Figure **2G****,** the screen **260** comprises a condition input region **261** for inputting the search condition "area", a condition input area **262** for inputting the search condition "genre", a search button **263** for initiating search of a store based on the inputted search conditions and a search result region **264** where the search result is presented.

In the example shown in Figure **2G****,** regarding the condition input region **261** and the condition input region **262,** a search condition can be selected in a pull-down form, wherein the search result of stores with the area "Shibuya/Omotesando/Aoyama" as a search condition is displayed in the search result area **264** of Figure **2G****.** In the example shown in Figure **2G****,** the search result region **264** comprises a region **264a** showing information of a store A that satisfies the search condition, a region **264b** showing information of a store B that satisfies the search condition, a region **264c** showing information of a store C that satisfies the search condition and a region **264d** showing information of a store D that satisfies the search condition.

When the region **264a** shown in Figure **2G** is selected by a user, for example, the screen would transition from the screen **260** of Figure **2G** to the screen **240** of Figure **2E** or the screen **250** of Figure **2F****.** When the screen transitions from the screen **260** of Figure **2G** to the screen **250** of Figure **2F****,** the user can simultaneously carry out reservation of the store A and reservation of the wine A by selecting the list wine reservation button **251** on the screen **250.**

In addition, in the example shown in Figure **2B****,** food that matches with the wine A is presented in a state of being associated with the stores that can provide the food in the food information region **212,** but the present invention is not limited thereto. For example, in the user information region **212** of Figure **2B****,** only one or more food that matches with the wine A may be presented to a user in the food information region **212** and then, when one among the presented one or more food is selected by a user, the screen **210** may transition to a screen presenting information of a store that can provide the selected food. This enables the user to select desired wine, food that matches with the desired wine and a store that cam provide the food that matches with the desired wine in that order.

In addition, in the embodiment shown in Figure **2A****,** two bottles of recommended wine and two bottles of new wine are displayed on the screen **200,** but the present invention is not limited thereto. In the screen **200,** the number of wine displayed as recommended wine and the number of wine displayed as new wine are any integral number that is 1 or higher.

In addition, in the embodiment shown in Figure **2B****,** three types of food that matches with the wine A and three types of stores where the wine A can be drunk are displayed on the screen **210,** but the present invention is not limited thereto. The number of food that matches the wine A and the number of stored where the wine A can be drunk displayed on the screen **210** are any integral number that is 1 or higher.

In addition, in the embodiment shown in Figure **2D****,** six stores that can provide food that matches with the wine A are displayed on the screen **230,** but the present invention is not limited thereto. The number of stores that provide food that matches with the wine A displayed on the screen **230** is any integral number that is 1 or higher.

In addition, in the embodiment shown in Figure **2F****,** three bottles of wine of the store A are displayed in a list on the screen **250,** but the present invention is not limited thereof. The number of wine of the store A displayed in a list on the screen **250** is any integral number that is 1 or higher.

In addition, in the embodiment shown in Figure **2G****,** four stores are displayed as search result of stores on the screen **260,** but the present invention is not limited thereto. The number of stores displayed on the screen **260** as a search result of stores is any integral number that is 1 or higher. In addition, in the embodiment shown in Figure **2G****,** there are "area" and "genre" as categories of the search conditions, but the present invention is not limited thereto. Any number of any category can be set as a search condition of stores.

### 3. Configuration of a computer system for realizing a new business model

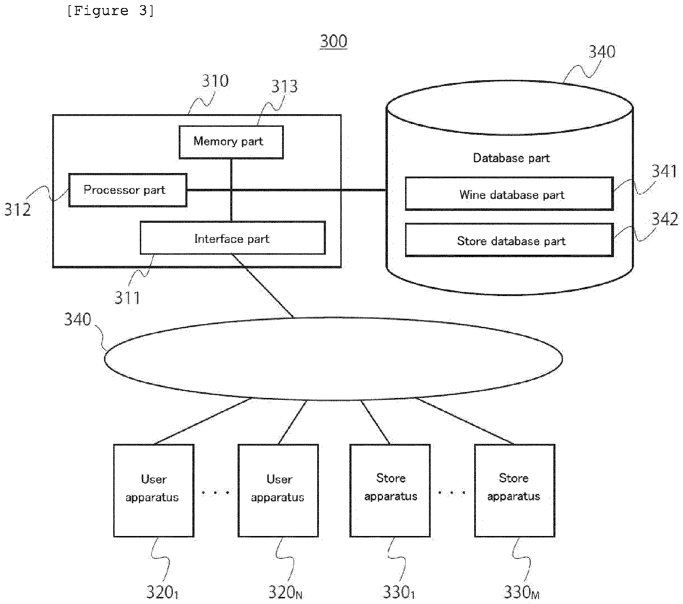

Figure 3 shows an example of a configuration of a computer system **300** for realizing the new business model discussed above.

In the embodiment shown in Figure **3****,** the computer system **300** is configured so as to enable connection to at least one user apparatus **320₁** to **320_{N}** used by a user and at least one store apparatus **330₁** to **330_{M}** used by a store via the internet **310.** Herein, M and N are any integral number that is 1 or higher.

The computer system **300** is administered/managed by a wholesaler. In the embodiment shown in Figure **3****,** the computer system **300** comprises an interface part **301,** a processor part **302** including one or more CPU (Central Processing Unit) and a memory part **303.** The hardware configuration of the computer system **300** is not particularly limited as long as the function thereof is realized and the hardware configuration of the computer system **300** can be configured with a single machine or configure by combining a plurality of machines.

The interface part **301** controls communication between the at least one user apparatus **320₁** to **320_{N}** and the at least one store apparatus **330₁** to **330_{M}.**

The memory part **303** houses a program required for performing a processing, data required for performing the program and the like. In this regard, it does not matter how a program is housed in the memory part **303.** For example, a program can be preinstalled in the memory part **303.** Alternatively, a program can be installed in the memory part **303** by being downloaded via a network such as the internet **310,** or a program can be installed in the memory part **303** through a storage medium such as an optical disk or a USB.

The processor part **302** controls the operation of the entirety of the computer system **300.** The processor part **302** reads the program housed in the memory part **303** and performs the program. This enables the computer system **300** to function as an apparatus performing a desired step and enables the computer system **300** to function as a web server providing a website.

A database part **340** is connected to the computer system **300.** The database part **340** comprises a wine database part **341** and a store database part **342.**

Each of the at least one user apparatus **320₁** to **320_{N}** is configured so as to enable communication with the computer system **300** via the internet **310.** For example, each of the at least of user apparatus **320₁** to **320_{N}** can be a portable wireless terminal such as a cell phone, smartphone, tablet terminal, smart glass or smart watch terminal, or a personal computer such as a desktop PC, laptop PC or note PC.

Each of the at least one store apparatus **330₁** to **330_{M}** is configured to enable communication with the computer system **300** via the internet **310.** For example, each of the at least one store apparatus **330₁** to **330_{M}** can be a management apparatus that comprehensively manages consumption of each store, or can be a register using a POS system (sales time point information management system).

In addition, in the embodiment shown in Figure **3****,** it is explained that the at least one user apparatus **320₁** to **320_{N}** can communicate with the computer system **300** via the internet **310,** but the present invention is not limited thereto. It is possible to use any type of network instead of the internet **310.** In addition, a configuration that electrically binds the at least one user apparatus **320₁** to **320_{N}** to the computer system **300** without going through the internet **310** or any alternative network is also within the scope of the present invention. Furthermore, a system uniformly incorporating both the function of a user apparatus **320₁** and the function of a computer system **300** (i.e., stand-alone type system) may be constricted as the computer system **300.** Such a stand-alone type computer system **300** is also within the scope of the present invention.

In addition, in the embodiment shown in Figure **3****,** the database part **340** is provided outside the computer system **300,** but the present invention is not limited thereto. It is also possible to provide the database part **340** inside the computer system **300.** The configuration of the database part **340** is not limited to a specific hardware configuration. For example, the database part **340** can be configured with a single hardware part, or can be configured with a plurality of hardware parts. For example, the database part **340** can be configured as a single external hard disk apparatus of the computer system **300,** or can be configured as a storage on a cloud connected through a network. Furthermore, the configuration of each database part comprised in the database part **340** is also not limited to a specific hardware configuration. For example, each database part comprised in the database part **340** can be configured with a single hardware part, or can be configured with a plurality of hardware parts.

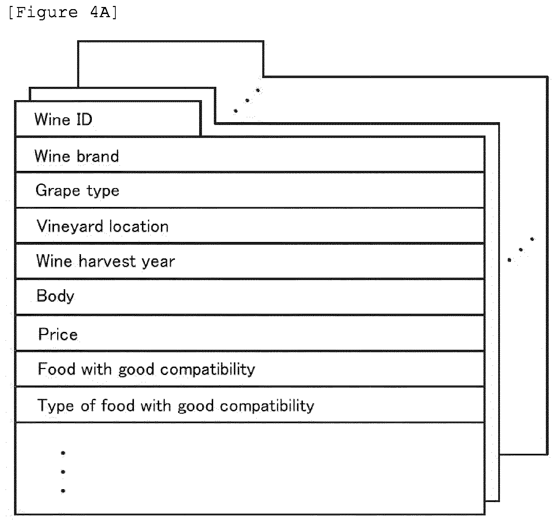

Figure **4A** shows an example of a configuration of information housed in the wine database part **341.**

Information regarding wine is housed in the wine database part **341.** The information regarding wine can be identified by information for identifying wine (wine ID). For example, wine brand (variety), grape type (type), vineyard location (production area), wine harvest year (vintage), body, price, food with good compatibility, type of food with good compatibility and the like are further housed in the wine database part **341.**

The information regarding wine housed in the wine database part **341** is not limited to information of wine that can be provided by a specific store. The information regarding wine housed in the wine database part **341** may comprise at least a part of information of wine owned by a wholesaler which sets a plurality of stores as wholesale destinations. The information regarding wine housed in the wine database part **341** may comprise at least a part of information of wine owned by a stocking dealer (importer) that is a stocking destination of a wholesaler. This enables the computer system **300** to present a user with information of wine owned by the wholesaler and information of wine owned by the stocking dealer. Therefore, a customer can examine various wine with rich variation without the choices of wine being limited to the storage of a specific store.

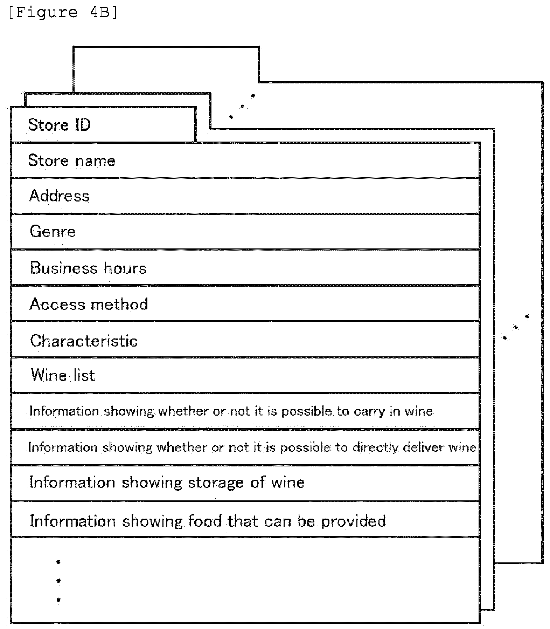

Figure **4B** shows an example of a configuration of information housed in the store database part **342.**

Information regarding a store is housed in the store database part **342.** The information regarding a store can be identified by information for identifying a store (store ID). For example, store name, address, genre, business hours, access method, characteristic, wine list listing wine that can be provided to a user (customer), information showing whether or not it is possible to carry in wine, information showing whether or not it is possible to directly deliver wine, information showing storage of wine, information showing food that can be provided and the like are further housed in the store database part **342.**

The computer system **300** can realize presenting of information of a store that can provide food with good compatibility with specific wine by, for example, referring to the "food with good compatibility" in the wine database part **341** and the "information showing food that can be provided" in the store database part **342.**

### 4. Processing of computer system

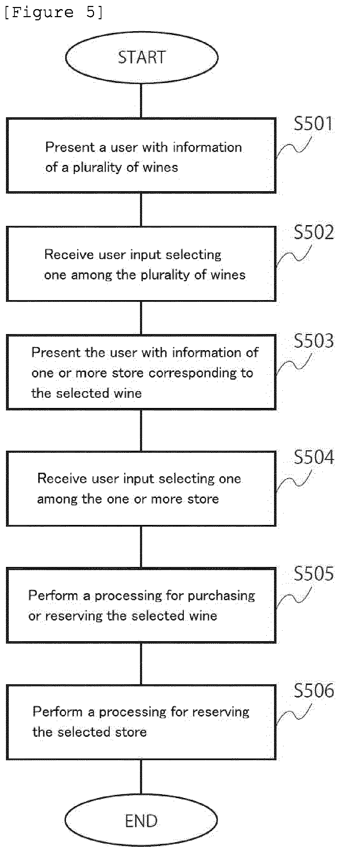

Figure 5 shows an example of a flow of the processing performed in the computer system **300.** In the embodiment shown in Figure **5****,** a user selects a wine that the user wants to drink and then selects a store that the user wants to go. Each step shown in Figure 5 is performed by the processor part **302** comprised in the computer system **300.** Each step shown in Figure 5 is explained below in detail.

Step **S501:** A processing for presenting a user with information of a plurality of wines. This processing comprises, for example, the processing of having a user apparatus carry out presenting of the information of a plurality of wines to the user. This step corresponds to the screen **200** shown in Figure **2A****.** The information of a plurality of wines presented in this step is, for example, information of wine housed in the wine database part **341** (e.g., information of wine owned by a wholesaler and/or information of wine owned by a stocking dealer that is a stocking destination of the wholesaler).

In addition, the information of a plurality of wines may be information of a plurality of wines provided to a user at a normal time, or may be real-time information of a plurality of wines. In other words, the processor part **302** of the computer system **300** may be configured to enable real time update of information of a plurality of wines presented to a user (e.g., based on information showing consumption of wine in each store and/or information showing stacking of wine by a wholesaler).

Step **S502:** A processing for receiving user input selecting one among the plurality of wines is performed. This step corresponds to, for example, the selection of the region **202** shown in the screen **200** of Figure **2A****.** The user input selecting one among the plurality of wines is, for example, received from a user apparatus used by the user.

Step **S503:** A processing for presenting the user with information of one or more store corresponding to the selected wine is performed. This processing comprises, for example, the processing of having the user apparatus carry out presenting of information of one or more store corresponding to the selected wine to the user. This step corresponds to the screen **210** shown in Figure **2B** or the screen **230** shown in Figure **2D****.**

The one or more store corresponding to the selected wine comprises, for example, but not limited to, one or more store that can provide the user with food that matches with the selected wine, one or more store that can provide the user with the selected wine and one or more store that can provide both the selected wine and food that matches with the selected wine.

Step **S504:** A processing for receiving the user input selecting one among the one or more store corresponding to the selected wine is performed. This step corresponds to selection of, for example, any of the region **214a,** region **214b,** region **214c,** carry-in reservation button **214α,** direct delivery reservation button **214β,** region **215a,** region **215d** and region **215e** shown in the screen **210** of Figure **2B****,** or any of the region **231a,** region **231b,** region **231c,** region **231f,** region **231g** and region **231h** shown in the screen **230** of Figure **2D****.** The user input selecting one among one or more store corresponding to the selected wine is, for example, received from the user apparatus used by the user.

Step **S505:** A processing for purchasing or reserving the selected wine is performed. This step corresponds to selection of, for example, the carry-in reservation button **214α** or direct delivery reservation button **214β** shown in the screen **210** of Figure **2B****,** or the reservation button **241** shown in the screen **240** of Figure **2E** and the screen **250** of Figure **2F****,** or the list wine reservation button **251** shown in the screen **250** of Figure **2F****.**

Step **S506:** A processing for reserving the selected store is performed. The processing for reserving the selected store comprises, for example, a processing for reserving the selected store which assumes carry-in of the selected wine to the selected store and a processing for reserving the selected store which assumes direct delivery of the selected wine to the selected store.

The processing for reserving the selected store which assumes carry-in of the selected wine to the selected store comprises, for example, a processing for setting a flag for charging the carry-in fee of wine to the user reserving the selected store, and the like. The processing for reserving the selected store which assumes direct delivery of the selected wine to the selected store comprises, for example, a processing for associating reservation information of the user reserving the selected store and delivery information of the selected wine in order to associate the directly delivered wine and the user who made the reservation, and the like.

In addition, in the embodiment shown in Figure **5****,** an example of performing the presenting of information of a store after presenting information of wine is exampled, but the present invention is not limited thereto. The processor part **302** of the computer **300** may be, for example, configured to further perform presenting of a user with information of one or more food that matches with the selected wine in response to receipt of the user input in step **S502** and receiving of the user input selecting one among the one or more food that matches with the selected wine, and may be configured to further perform presenting of information of one or more store that can provide the user with the selected food to the user in response to receiving the user input selecting one among the one or more food that matches with the selected wine in step **S503.**

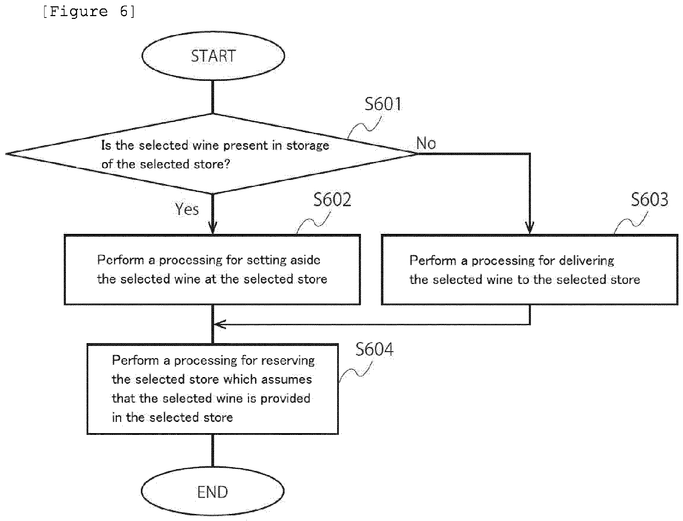

Figure 6 shows another example of the flow of the processing performed in the computer system **300.** Each step shown in Figure **6** is an example of the detailed flow of step **S506** shown in Figure **5**. In the embodiment shown in Figure **6****,** a user wishes to drink desired wine in a desired store. Each step shown in Figure **6** is explained below in detail.

Step **S601:** A processing for determining whether or not the wine selected in step **S502** of Figure **5** exists in storage of the store selected in step **S504** of Figure **5** is performed. This processing is performed, for example, based on information showing storage of wine housed in the store database part **342.** When the determination result is "Yes", the processing proceeds to step **S602,** and when the determination result is "No", the processing proceeds to step **S603.**

Step **S602:** A processing for setting aside the selected wine at the selected store in order to provide the user with the selected wine in the selected store. The processing for setting aside the selected wine at the selected store comprises, for example, a processing for updating information showing storage of the selected wine in the selected store so as to reduce the store of the selected wine in the selected store.

Step **S603:** A processing for delivering the selected wine to the selected store is performed in order to present the user with the selected wine in the selected store. The processing for delivering the selected wine to the selected store comprises, for example, a processing for arranging delivery of the selected wine to the selected store.

Step **S604:** A processing for reserving the selected store which assumes that the selected wine is provided in the selected store is performed. This processing comprises, for example, a processing for generating reservation information of the selected store so as to associate with the information of the wine that is set aside or the delivery information of the delivered wine.

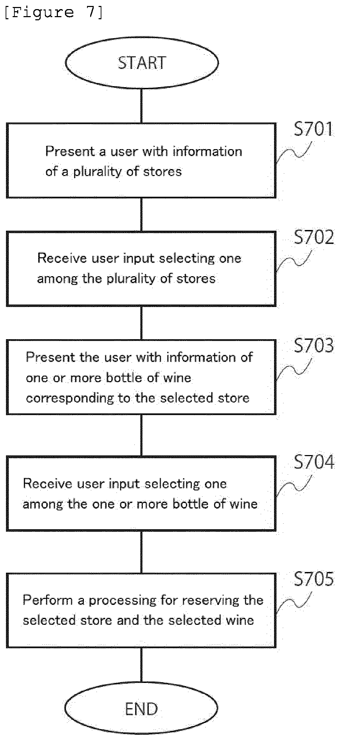

Figure **7** shows an example of the flow of the processing performed in the computer system **300.** In the embodiment shown in Figure **7****,** the user selects a store that the user wants to go and then selects wine that the user wants to drink. Each step shown in Figure **7** is performed by the processor part **302** comprised in the computer system **300.** Each step shown in Figure **7** is explained below in detail.

Step **S701:** A processing for presenting the user with information of a plurality of stores is performed. This processing comprises, for example, the processing that has the user apparatus present the information of a plurality of stores to the user.

Step **S702:** A processing for receiving the user input of selecting one among a plurality of stores is performed. This step corresponds to, for example, selecting any of the region 264a, region 264b, region 264c and region 264 shown in the screen 260 of the Figure 2G. The user input of selecting one among a plurality of stores is, for example, received from the user apparatus used by the user.

Step **S703:** A processing for presenting the user with information of one or more bottle of wine corresponding to the selected store is performed. This processing comprises, for example, the processing of having the user apparatus present the user with information of one or more bottle of wine corresponding to the selected store. This step corresponds to the screen **250** shown in Figure **2F****.**

The one or more bottle of wine corresponding to the selected store comprises, for example, one or more bottle of wine drunk by the user in the selected store (e.g., one or more bottle of wine present in storage of the selected store, one or more bottle of wine that (is not present in storage of the selected store but) can be provided to the user in the selected store by delivery to the selected store, one or more bottle of wine (which is not present in storage of the selected store but) drunk by the user in the selected store by delivery to the selected store and the like). The one or more bottle of wine corresponding to the selected store comprises one or more bottle of wine at least owned by a wholesaler which sets a plurality of stores as wholesale destinations (e.g., wine owned by the wholesaler and/or wine owned by a stocking dealer that is the stocking destination of the wholesaler).

Step **S704:** A processing for receiving the user input of selecting one among the one or more bottle of wine corresponding to the selected store is performed. This step corresponds to, for example, selection of the list wine reservation button **251** shown in the screen **250** of Figure **2F****.** The user input of selecting one among the one or more bottle of wine corresponding to the selected store is, for example, received from the user apparatus used by the user.

Step **S705:** A processing for reserving the selected store and the selected wine is performed. This processing comprises, for example, a processing for generating reservation information in the selected store (reservation information including information of the selected wine that should be provided to the user).

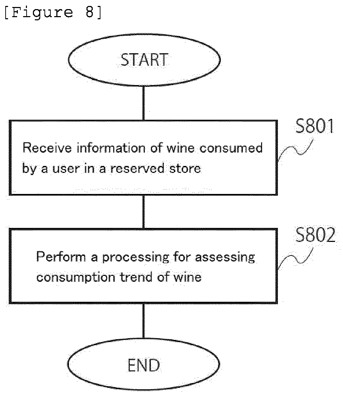

Figure **8** shows an example of the flow of the processing performed in the computer system **300.** Each step shown in Figure **8** is performed by the processor part **302** comprised in the computer system **300.** Each step shown in Figure **8** is explained below in detail.

Step **S801:** A processing for receiving information of the wine consumed by the user (e.g., in the reserved store). The information of the wine consumed by the user is, for example, received from the store apparatus in the reserved store. Furthermore, the wine consumed by the user may comprise wine selected by the user upon reservation of the wine and wine carried in the reserved store or wine delivered to the reserved store or wine present the storage of the reserved store.

Step **S802:** A processing for assessing consumption trend of wine including purchased or reserved wine based on the information of the wine consumed by the user. The processing for assessing consumption trend of wine comprises, for example, a processing for statistically analyzing information of the wine consumed by the user, a processing for summarizing information of the wine consumed by the user into a graph, and the like.

As such, the wholesaler (computer system **300**) not only can utilize the information of the wine consumed by the user in the reserved store to identify the consumption trend of wine (e.g., wine in season, popular wine), but also can attempt optimization of stocking of wine, optimization of selection of wine in each store and the like.

In addition, in the embodiment shown in Figure **5** to Figure **8** explained an example of realizing the processing of each step shown in Figure **5** to Figure **8** by the processor part performing the program housed in the memory part, but the present invention is not limited thereto. At least a part of the processing of each step shown in Figure **5** to Figure **8** may be realized by a hardware configuration such as a control circuit.

Although the present invention has been exemplified using a preferable embodiment of the present invention as described above, the interpretation of the present invention should not be limited to this embodiment. It is understood that the scope of the present invention should be interpreted by the Claims alone. It is understood that those skilled in the art can practice an equivalent scope based on the description of the present invention and common general knowledge from the description of the specific and preferable embodiment of the present application.

### [Industrial Applicability]

The present invention is useful as an invention that provides a system for purchasing or reserving wine, a method and program implemented in said system and the like so as to enable the user to drink the wine the user wants to drink in a reserved store.

### [Reference Signs List]

- 300: computer system
- 310: internet
- 320₁ to 320_{N}: user apparatus
- 330₁ to 330_{M}: store apparatus
- 340: database part

## Claims

1. A system for purchasing or reserving wine, the system comprising:
a means of presenting a user with information of a plurality of wines;
a means of receiving first user input selecting one among the plurality of wines;
a means of presenting the user with information of one or more store corresponding to the selected wine;
a means of receiving second user input selecting one among the one or more store; and
a means of performing, in response to receiving the second user input, a processing for purchasing or reserving the selected wine in order to provide the user with the selected wine in the selected store.

2. The system of claim 1, further comprising a means of performing a processing for reserving the selected store.

3. The system of claim 2, wherein the processing for reserving the selected store comprises a processing for reserving the selected store which assumes carry-in of the selected wine to the selected store or a processing for reserving the selected store which assumes delivery of the selected wine to the selected store.

4. The system of claim 2, wherein the processing for reserving the selected store comprises:
a processing for determining whether or not the selected wine is present in storage of the selected store;
a processing for setting aside the selected wine at the selected store when it is determined that the selected wine is present in storage of the selected store; and
a processing of reserving the selected store which assumes that the selected wine is provided in the selected store.

5. The system of any of claims 1 to 4, wherein the one or more store corresponding to the selected wine comprises one or more store that can provide the user with food that matches with the selected wine.

6. The system of any of claims 1 to 5, further comprising:
a means of presenting, in response to receiving the first user input, information of one or more food that matches with the selected wine; and
a means of receiving third user input selecting one among the one or more food,
wherein the means of presenting the user with information of one or more store corresponding to the selected wine comprises:
a means of presenting, in response to receiving the third user input, the user with information of one or more store that can provide the user with the selected food.

7. The system of any of claims 1 to 6, wherein:
the plurality of wines comprise a plurality of wines at least owned by a wholesaler which sets a plurality of stores as wholesale destinations; and
the plurality of stores comprise the one or more store.

8. The system of claim 7, wherein the plurality of wines at least owned by the wholesaler comprises wine owned by the wholesaler and wine owned by a stocking dealer that is a stocking destination of the wholesaler.

9. The system of any of claims 1 to 8, further comprising a means of updating information of the plurality of wines presented to the user in real time.

10. The system of any of claims 1 to 9, further comprising:
a means of receiving information of wine consumed by the user in the reserved store, wherein the wine consumed by the user comprises the purchased or reserved wine and wine carried in the reserved store or wine delivered to the reserved store or wine present in storage of the reserved store; and
a means of performing a processing for assessing consumption trend of wine based on the information of wine consumed by the user.

11. A method performed in a system for purchasing or reserving wine, wherein the system comprises a processor part, wherein the method comprises:
the processor part presenting a user with information of a plurality of wines;
the processor part receiving first user input selecting one among the plurality of wines;
the processor part presenting the user with information of one or more store corresponding to the selected wine;
the processor part receiving second user input selecting one among the one or more store; and
the processor part performing, in response to receiving the second user input, a processing for purchasing or reserving the selected wine in order to provide the user with the selected wine in the selected store.

12. A program performed in a system for purchasing or reserving wine, wherein the system comprises a processor part, wherein the program, when performed by the processor part, causes the processor part to at least perform:
presenting a user with information of a plurality of wines;
receiving first user input selecting one among the plurality of wines;
presenting the user with information of one or more store corresponding to the selected wine;
receiving second user input selecting one among the one or more store; and
performing, in response to receiving the second user input, a processing for purchasing or reserving the selected wine in order to provide the user with the selected wine in the selected store.

13. A system for purchasing or reserving wine, the system comprising:
a means of presenting a user with information of a plurality of stores;
a means of receiving first user input of selecting one among the plurality of stores;
a means of presenting, in response to receiving the first user input, the user with information of one or more bottle of wine corresponding to the selected store;
a means of receiving second user input selecting one among the one or more bottle of wine; and
a means of performing, in response to receiving the second user input, a processing of reserving the selected store and the selected wine in order to provide the user with the selected wine in the selected store.

14. The system of claim 13, wherein the one or more bottle of wine corresponding to the selected store comprises one or more bottle of wine present in storage of the selected store.

15. The system of claim 13, wherein the one or more bottle of wine corresponding to the selected store comprises one or more bottle of wine at least owned by a wholesaler which sets a plurality of stores as wholesale destinations.

16. The system of claim 15, wherein the one or more bottle of wine at least owned by the wholesaler comprises wine owned by the wholesaler and wine owned by a stocking dealer that is a sticking destination of the wholesaler.

17. The system of any of claims 13 to 16, further comprising a means of updating information of the one or more bottle of wine presented to the user in real time.

18. The system of any of claims 13 to 17, further comprising:
a means of receiving information of wine consumed by the user in the reserved store, wherein the wine consumed by the user comprises the selected wine and wine carried in the reserved store or wine delivered to the reserved store or wine present in storage of the reserved store; and
a means of performing a processing for assessing consumption trend of the purchased or reserved wine based on the information of wine consumed by the user.

19. A method performed in a system for purchasing or reserving wine, wherein the system comprises a processor part, wherein the method comprises:
the processor part presenting a user with information of a plurality of stores;
the processor part receiving first user input selecting one among the plurality of stores;
the processor part presenting, in response to receiving the first user input, the user with information of one or more bottle of wine corresponding to the selected store;
the processor part receiving second user input selecting one among the one or more bottle of wine; and
the processor part performing, in response to receiving the second user input, a processing for reserving the selected store and the selected wine in order to provide the user with the selected wine in the selected store.

20. A program performed in a system for purchasing or reserving wine, wherein the system comprises a processor part,
wherein the program, when performed by the processor part, causes the processor part to at least perform:
presenting a user with information of a plurality of stores;
receiving first user input selecting one among the plurality of stores;
presenting, in response to receiving the first user input, the user with information of one or more bottle of wine corresponding to the selected store;
receiving second user input selecting one among the one or more bottle of wine; and
performing. in response to receiving the second user input, a processing for reserving the selected store and the selected wine in order to provide the user with the selected wine in the selected store.
